# EUROPEAN PATENT APPLICATION

(11) **EP 2 163 849 A2**
(43) Date of publication of application: **17.03.2010**
(21) Application number: 09169097.4
(22) Date of filing: 31.08.2009
(51) Int. Cl.: G01C 23/00

(54) **Methods and systems for indicating fuel required to reach a location**

(30) Priority: 10.09.2008 US 207681
(71) Applicant: Honeywell International Inc., Morristown, NJ 07962 (US)
(72) Inventor: Badli, Harsh, Morristown, NJ 07962-2245 (US); Samuel, Nithin, Morristown, NJ 07962-2245 (US); Ghosh, Rupak, Morristown, NJ 07962-2245 (US)
(74) Representative: Buckley, Guy Julian

(57) **Abstract**

Methods and systems are provided for indicating on a display device (102) whether a vehicle has sufficient fuel remaining to travel from a first location (204) to a second location (208). An exemplary method involves determining the amount of fuel required for the vehicle to travel from the first location (204) to the second location (208). If the amount of fuel required is greater than a threshold fuel value associated with the first location (204), the method displays a graphical representation of the second location (208) on the display device (102, 200) using a first visually distinguishable characteristic. If the first amount of fuel is less than the threshold fuel value, the method displays the graphical representation of the second location (208) on the display device (102, 200) using a second visually distinguishable characteristic.

## Description

### TECHNICAL FIELD

The subject matter described herein relates generally to vehicle and avionics systems, and more particularly, embodiments of the subject matter relate to flight management systems and related cockpit displays adapted for indicating whether the aircraft has enough fuel to reach a waypoint.

### BACKGROUND

Flight Management Systems (FMS), also known as Flight Management Computers (FMC), are utilized in aircraft for flight planning, navigation, and providing situational awareness to the pilot through the use of various displays, such as a navigational map. Using the navigational map, the pilot may identify a desired location, terrain feature, or waypoint that he would like to fly over. For example, a pilot may desire to fly the aircraft over a nearby mountain range. However, most flight management systems do not provide a utility to automatically calculate fuel, time and distance required to any waypoint on the navigation map. Often, the pilot (or another crew member or air traffic controller) must manually calculate the fuel, time, and distance required for reaching the desired destination.

In case of an emergency, a pilot can use FMS functionality to find the nearest landing locations from the current aircraft position. This functionality, commonly known as the NRST function, lists a certain number of landing locations nearest to the current aircraft position. However, the pilot is often required to manually calculate the fuel requirements to each of these nearest airports by using calculators provided by the FMS. Additionally, the pilot also must determine the amount of fuel remaining in the aircraft and compare the remaining amount of fuel to the calculated required fuel to determine if there is sufficient fuel to reach the intended landing location. Alternatively, some general aviation aircraft may land on certain types of terrain in an emergency, such as plain ground or a road strip. Even though the terrain data is on the navigation map, the pilot still must perform manual calculations to determine the fuel required to reach that terrain waypoint. In emergency situations, pilots are often in a state of distress, which may increase the time for calculating the fuel requirements.

Additionally, some landing locations may be within a range or distance which would require the aircraft to either descend at an uncomfortably fast rate or bank and make steep turns to reach the landing location. A clean descent is often preferred in cases of emergencies; in other situations, the pilot may prefer to land at or near certain locations. For example, storms, dense clouds, or environmental conditions may cause a pilot to look for landing locations in a certain direction. This places additional demand on the pilot in emergency situations.

### BRIEF SUMMARY

A method is provided for indicating on a display device whether a vehicle has sufficient fuel remaining to travel from a first location to a second location. The method comprises determining the amount of fuel required for the vehicle to travel from the first location to the second location. If the amount of fuel required is greater than a threshold fuel value associated with the first location, the method further comprises displaying a graphical representation of the second location on the display device using a first visually distinguishable characteristic. If the first amount of fuel is less than the threshold fuel value, the method comprises displaying the graphical representation of the second location on the display device using a second visually distinguishable characteristic.

An apparatus is provided for a display system for use in an aircraft. The display system comprises a display device associated with the aircraft and adapted to display a graphical representation of a waypoint. The display system further comprises a navigation system adapted to determine a current position of the aircraft. A flight management system is coupled to the display device and the navigation system. The flight management system is configured to calculate a required amount of fuel to travel from the current position of the aircraft to a location associated with the waypoint and render the graphical representation of the waypoint using a first visually distinguishable characteristic if the required amount of fuel is greater than a current amount of fuel onboard the aircraft. If the required amount of fuel is less than the current amount of fuel onboard the aircraft, the flight management system is configured to render the graphical representation of the waypoint on the display device using a second visually distinguishable characteristic.

### BRIEF DESCRIPTION OF THE DRAWINGS

Embodiments of the subject matter will hereinafter be described in conjunction with the following drawing figures, wherein like numerals denote like elements, and

FIG. 1 is a block diagram of a display system suitable for use in an aircraft in accordance with one embodiment;

FIG. 2 is a schematic view of an exemplary navigational map suitable for use with the display system of FIG. 1;

FIG. 3 a flow diagram of an exemplary waypoint display process suitable for use with the display system of FIG. 1 in accordance with one embodiment;

FIG. 4 is a schematic view of an exemplary navigational map suitable for use with the waypoint display process of FIG. 3 in accordance with one embodiment; and

FIG. 5 is a schematic view of an exemplary navigational map suitable for use with the waypoint display process of FIG. 3 in accordance with one embodiment.

### DETAILED DESCRIPTION

The following detailed description is merely exemplary in nature and is not intended to limit the subject matter of the application and uses thereof. Furthermore, there is no intention to be bound by any theory presented in the preceding background or the following detailed description.

Techniques and technologies may be described herein in terms of functional and/or logical block components, and with reference to symbolic representations of operations, processing tasks, and functions that may be performed by various computing components or devices. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting. For example, terms such as "first", "second" and other such numerical terms referring to structures do not imply a sequence or order unless clearly indicated by the context. Such terminology may include the words specifically mentioned above, derivatives thereof, and words of similar import.

For the sake of brevity, conventional techniques related to graphics and image processing, navigation, flight planning, aircraft controls, sensing and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Technologies and concepts discussed herein relate to flight management systems adapted for rendering a waypoint on a navigational map. If there is insufficient fuel onboard the aircraft to reach the waypoint, the waypoint is displayed in a first visually distinguishable manner (e.g., in a first color) to indicate that the waypoint cannot be reached. If there is sufficient fuel onboard the aircraft to reach the waypoint, the waypoint is displayed in a second visually distinguishable manner (e.g., in a second color) to indicate that the waypoint can be reached.

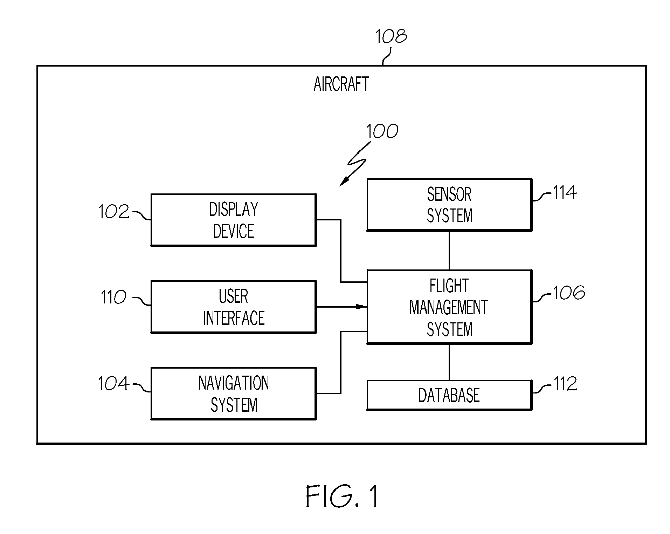

Referring now to FIG. 1, in an exemplary embodiment, a display system 100 may include, without limitation, a display device 102, a navigation system 104, and a flight management system 106 (FMS). In an exemplary embodiment, the elements of display system 100 are located onboard an aircraft 108. The display system 100 may further include a user interface 110 for enabling interactivity with the display system 100. The display system 100 may also include a database 112 and/or sensor system 114 suitably configured to support operation of the display system 100 as described in greater detail below.

It should be understood that FIG. 1 is a simplified representation of a display system 100 for purposes of explanation and ease of description, and FIG. 1 is not intended to limit the application or scope of the subject matter in any way. In practice, the display system 100 and/or aircraft 108 will include numerous other devices and components for providing additional functions and features, as will be appreciated in the art. Although the subject matter may be described herein in the context of an aviation environment, various aspects of the subject matter may be implemented in other vehicles, for example, motor vehicles (e.g., cars or motorcycles) and/or watercraft, and the subject matter is not intended to be limited to aircraft or any particular vehicle.

In an exemplary embodiment, the display device 102 is coupled to the flight management system 106. The flight management system 106 is coupled to the navigation system 104 and sensor system 114 for obtaining real-time data and/or information regarding operation of the aircraft 108. The flight management system 106 is configured to display, render, or otherwise convey one or more graphical representations or images associated with operation of the aircraft 108 on the display device 102, as will be appreciated in the art. In accordance with one or more embodiments, the flight management system 106 is configured to determine whether the aircraft 108 has sufficient fuel remaining to reach an identified location. In this regard, the user interface 110 may be coupled to the flight management system 106 to allow a pilot and/or crew member to indicate and/or identify a desired location, as described in greater detail below.

In an exemplary embodiment, the display device 102 is realized as an electronic display configured to display flight information or other data associated with operation of the aircraft 108 under control of the flight management system 106, as will be understood. In an exemplary embodiment, the display device 102 is located within a cockpit of the aircraft 108. It will be appreciated that although FIG. 1 shows a single display device 102, in practice, additional display devices may be present. The user interface 110 may also be located within the cockpit of the aircraft 108 and adapted to allow a user (e.g., pilot, co-pilot, or crew member) to interact with the flight management system 106, as described in greater detail below. In various embodiments, the user interface 110 may be realized as a keypad, touchpad, keyboard, mouse, touchscreen, joystick, or another suitable device adapted to receive input from a user. In an exemplary embodiment, the user interface 110, display device 102, and flight management system 106 are cooperatively configured to enable a user to indicate and/or select a desired waypoint or landing location on a navigational map rendered on the display device 102, as described below. It should be appreciated that although FIG. 1 shows the display device 102 and user interface 110 within the aircraft 108, in practice, either or both may be located outside the aircraft 108 (e.g., on the ground as part of an air traffic control center or another command center) and communicatively coupled to the flight management system 106 over a data link. For example, the display device 102 and/or user interface 110 may communicate with the flight management system 106 using a radio communication system or another data link system, such as a controller pilot data link (CPDL).

In an exemplary embodiment, the navigation system 104 is configured to obtain one or more navigational parameters associated with operation of the aircraft 108. The navigation system 104 may be realized as a global positioning system (GPS), inertial reference system (IRS), or a radio-based navigation system (e.g., VHF omni-directional radio range (VOR) or long range aid to navigation (LORAN)), and may include one or more sensors suitably configured to support operation of the navigation system 104, as will be appreciated in the art. In an exemplary embodiment, the navigation system 104 is capable of obtaining and/or determining the current location of the aircraft 108 (e.g, the latitude and longitude) and the heading of the aircraft 108 (i.e., the direction the aircraft is traveling in relative to some reference) and providing these navigational parameters to the flight management system 106.

Depending on the embodiment, the sensor system 114 is configured to obtain one or more operational parameters associated with the aircraft 108. It will be appreciated that although FIG. 1 shows a single sensor system 114, in practice, multiple sensor systems may be present. The sensor system 114 may be integral with the aircraft 108, either internally or externally, or otherwise located onboard or within the aircraft 108. In various embodiments, the sensor system 114 may include one or more of the following: altitude sensors, velocity and/or speed sensors, airspeed or windspeed sensors, temperature sensors, pressure sensors, fuel gauges, flow sensors, and/or other fuel-related sensors. These and other possible combinations of sensors may be cooperatively configured to support operation of the display system 100 as described in greater detail below. Although not illustrated, the sensor system 114 may be coupled to a fuel tank onboard the aircraft 108, and the sensor system 114 can determine the fuel flow rate and/or the amount of fuel remaining onboard the aircraft 108. The sensor system 114 may also be configured to obtain and/or determine one or more of the following: the current altitude of the aircraft 108, a speed metric associated with the aircraft 108 (e.g., groundspeed or velocity), and/or the current wind speed and direction.

In an exemplary embodiment, the flight management system 106 is located onboard the aircraft 108. Although FIG. 1 is a simplified representation of display system 100, in practice, the flight management system 106 may be coupled to one or more additional modules or components as necessary to support navigation, flight planning, and other conventional aircraft control functions in a conventional manner. The flight management system 106 may include or otherwise access a terrain database or other navigational information for rendering a navigational map on the display device 102, as described below. The navigational map may be based on one or more sectional charts, topographic maps, digital maps, or any other suitable commercial or military database or map, as will be appreciated in the art. In an exemplary embodiment, the flight management system 106 also accesses or includes a database 112 that contains location information for a plurality of known waypoints (e.g., airports, helipads, landing strips, navaids, or distance measuring equipment (DME)). The position information may include the latitude, longitude, and altitude associated with each waypoint in the database.

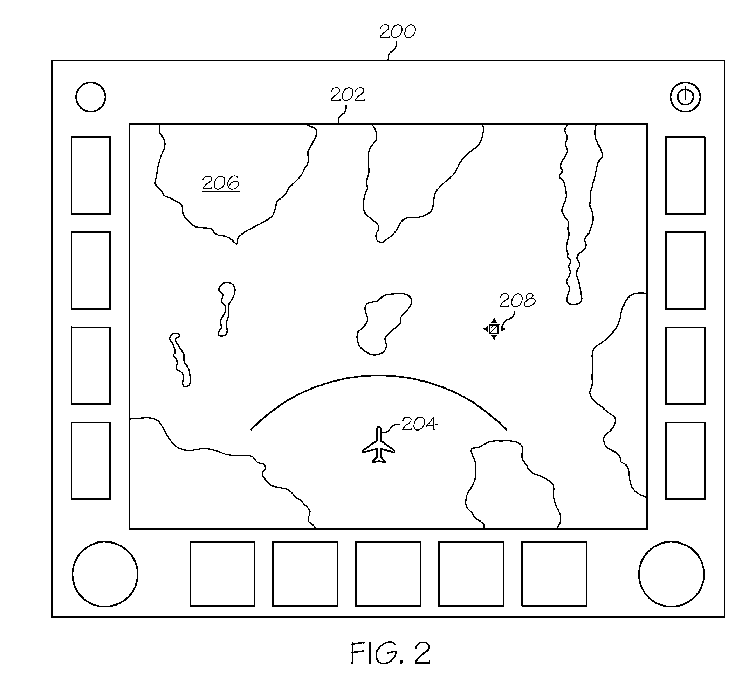

Referring now to FIG. 2, and with continued reference to FIG. 1, the flight management system 106 is configured to control the rendering of a navigational map 202 displayed on a display device 200. The flight management system may also be configured to render a graphical representation of the aircraft 204 on the map 202, which may be overlaid or rendered on top of a background 206. The background 206 may be a graphical representation of the terrain, topology, or other suitable items or points of interest within a given distance of the aircraft 108, which may be maintained by the flight management system 106 in a terrain database or navigational database. Although FIG. 2 depicts a top view (e.g., from above the aircraft 204) of the navigational map 202, in practice, alternative embodiments may utilize various perspective views, such as side views, three-dimensional views (e.g., a three-dimensional synthetic vision display), angular or skewed views, and the like. Further, in some embodiments, the aircraft 204 may be shown as traveling across the map 202, as opposed to being located at a fixed position on the map 202, and FIG. 2 does not limit the scope of the subject matter in any way.

In an exemplary embodiment, the map 202 is associated with the movement of the aircraft, and the background 206 refreshes or updates as the aircraft travels, such that the graphical representation of the aircraft 204 is positioned over the background 206 in a manner that accurately reflects the real-world positioning of the aircraft 108 relative to the earth. In accordance with one embodiment, the map 202 is updated or refreshed such that it is centered on and/or oriented with the aircraft 204. A user may utilize the map 202 and/or the flight management system to identify a location 208 for determining if the aircraft has the sufficient fuel remaining to travel to the desired location 208, as described in greater detail below.

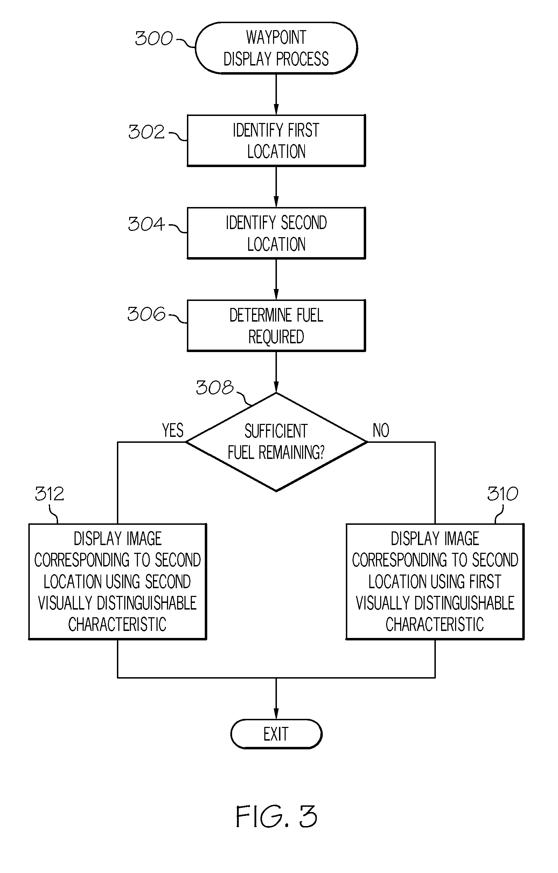

Referring now to FIG. 3, in an exemplary embodiment, a display system 100 may be configured to perform waypoint display process 300 and additional tasks, functions, and operations described below. The various tasks may be performed by software, hardware, firmware, or any combination thereof. For illustrative purposes, the following description may refer to elements mentioned above in connection with FIG. 1 and FIG. 2. In practice, the tasks, functions, and operations may be performed by different elements of the described system, such as the display device 102, the navigation system 104, the flight management system 106, the user interface 110, or the sensor system 114. It should be appreciated that any number of additional or alternative tasks may be included, and may be incorporated into a more comprehensive procedure or process having additional functionality not described in detail herein. Furthermore, although the waypoint display process 300 may be described herein in an aviation context, the subject matter herein may be utilized with other vehicles, such as, for example, motor vehicles (e.g., cars or motorcycles) and/or watercraft.

Referring again to FIG. 3, and with continued reference to FIG. 1 and FIG. 2, a waypoint display process 300 may be performed to indicate on the display device whether a vehicle, such as aircraft 108, has sufficient fuel remaining to travel to an identified or desired destination location. In an exemplary embodiment, the waypoint display process 300 may initialize by identifying a first location and a second location for determining whether the aircraft has sufficient fuel remaining to travel from the first location to the second location (task 302, 304). In this regard, the first location corresponds to an initial or starting location and the second location corresponds to a destination location. In accordance with one or more embodiments, the flight management system may identify the current position of the aircraft as the first location. However, as described in greater detail below, the first location is not limited to the current position of the aircraft and could be any location or waypoint identified or selected by a user.

In accordance with one embodiment, the second location may be identified on a display device by a user. For example, referring again to FIG. 2, if the user interface includes a mouse, the user may direct the pointer or cursor to an area (e.g., the area corresponding to location 208) on the navigational map 202 and click to identify the area (e.g., location 208) as the second location. Alternatively, if the user interface or display device includes a touchscreen interface, a user may simply touch the desired location on the navigational map to identify the second location. Various means and/or methods for receiving a user input associated with a display are well known, and will not be described in detail herein. Furthermore, the subject matter described herein is not limited to a particular means for receiving user input.

It should be appreciated that the second location can be any location on the map, and is not constrained to previously defined locations, waypoints, navaids, or the like. For example, a user may simply locate a point of interest or terrain feature on the navigational map, and select the corresponding area of the navigational map. As shown in FIG. 2, the waypoint display process 300 may be configured to display a waypoint symbol 208 and/or create a new waypoint for the desired location 208 if it is not a known or previously defined waypoint. In an exemplary embodiment, the flight management system is capable of determining a real-world location (using, for example, latitude and longitude values) which corresponds to the desired location 208. The flight management system may be configured to calculate and/or determine the real-world location of the identified location 208, for example, by using the current location of the aircraft, the current aircraft heading, the scale of the map 202, and/or other additional factors, as will be appreciated in the art. Similarly, the first location may also be manually identified on the display device by a user.

In another embodiment, the second location may be identified by using a database that contains location information for a plurality of waypoints. The database may include multiple categories of waypoints, such as, for example, airports, helipads, landing strips, navaids, or distance measuring equipment (DME), and maintains the association of waypoints and their respective locations. In accordance with one embodiment, the flight management system may utilize the database to determine the waypoint nearest to the first location and identify the respective location associated with the nearest waypoint as the second location. The flight management system may be equipped with a nearest function (often abbreviated NRST), for determining the nearest waypoints to a specified location, typically the current location of the aircraft. In accordance with one embodiment, the waypoint display process 300 may utilize the NRST function (or an equivalent thereof) to identify a plurality of possible destination locations, as described in greater detail below. Alternatively, the flight management system may identify the second location using another methodology, and the subject matter described herein is not intended to be limited to a particular manner of identifying the second location.

In an exemplary embodiment, the waypoint display process 300 continues by determining the amount of fuel required for the aircraft to travel from the first location to the second location (task 306). For example, the flight management system may calculate the required amount of fuel based on the distance between the first location and the second location, the weight of the aircraft, the current fuel flow rate for the aircraft, and a speed metric associated with the aircraft. The distance between the first location and the second location may be determined as straight line distance, or determined using a modified path which may be required by terrain or other factors, as will be appreciated in the art. The flight management system may also take into account the current wind speed and wind direction to compensate for any headwind or tailwind that may affect fuel economy. The flight management system may also account for any variations in fuel economy caused by temperature or pressure.

In an exemplary embodiment, the waypoint display process 300 continues by determining if the aircraft has sufficient fuel remaining to travel from the first location to the second location by comparing the calculated required amount of fuel to a threshold fuel value associated with the first location (task 308). In a preferred embodiment, the threshold fuel value corresponds to the fuel level associated with the first location. For example, if the first location is the current position of the aircraft, then the flight management system compares the fuel remaining onboard the aircraft at that time to the required amount of fuel to reach the second location. In other embodiments, the threshold fuel value may be determined, for example, by modifying the current amount of fuel onboard the aircraft (e.g., multiplying the current amount of fuel by some percentage or subtracting an offset) as a safety measure to account for any tolerance or inaccuracies associated with the parameters used in the fuel requirement calculation.

If the required amount of fuel is greater than the threshold value (e.g., the remaining amount of fuel onboard the aircraft), the waypoint display process 300 displays the image and/or graphical representation of the second location on the display device using a first visually distinguishable characteristic chosen to warn the user that the aircraft cannot reach the second location (task 310). The visually distinguishable characteristic may be realized by using one more of the following: color, hue, tint, brightness, graphically depicted texture or pattern, contrast, transparency, opacity, animation (e.g., strobing, flickering or flashing), and/or other graphical effects. For example, referring again to FIG. 2, the identified waypoint 208 may be displayed in amber, yellow, or another color designed to warn the pilot that the desired location is out of range of the aircraft. In other embodiments, the identified waypoint 208 may be displayed using another characteristic (brightness, contrast, tint, transparency, opacity) to visually distinguish the identified waypoint 208 from other elements displayed on the navigational map 200 In accordance with one or more embodiments, the flight management system may also determine a margin fuel value for the second location by subtracting the required amount of fuel from the current amount of fuel onboard the aircraft, and displaying the margin fuel value on the map. The margin fuel value may be displayed on the navigational map proximate to the second location or otherwise displayed on the display device in a manner such that it is associated with the second location. If the required amount of fuel is less than or equal to the threshold value, the waypoint display process 300 displays the image and/or graphical representation of the second location on the display device in a second visually distinguishable characteristic chosen to indicate to the user that the aircraft can reach the second location (task 312). For example, referring again to FIG. 2, the identified waypoint 208 may be displayed in green or another color designed to indicate to the pilot that the desired location is within range of the aircraft.

In accordance with one embodiment, although not illustrated in FIG. 3, the waypoint display process 300 may be configured to determine whether the second location is a landing location. As used herein, a "landing location" means a location on the ground suitable for landing a given aircraft, as will be appreciated in the art. For example, depending on the aircraft, a suitable landing location may be an airport, heliport, runway, helipad, landing strip, stretch of road, body of water, or some other suitable terrain. The second location may be indicated as a landing location manually by a user (e.g., via the user interface) or the flight management system may automatically determine the second location is a landing location. For example, if the flight management system (e.g., NRST) is used to identify an airport, helipad, landing strip, or other waypoint known to be a landing location as the second location, the flight management system may automatically determine the second location is a landing location.

In an exemplary embodiment, if the second location is determined to be a landing location, the waypoint display process 300 determines whether the aircraft can reach the landing location on the ground with a clean or comfortable descent. As used herein, a "clean descent" or "comfortable descent" refers to a descent that allows a pilot to descend and approach a landing location in a relatively straight manner without exceeding a rate of descent determined to be comfortable. That is, the aircraft may reach the landing location without exceeding the comfortable rate of descent for the aircraft or descend in a manner that involves undesirable or potentially uncomfortable turns and/or banking (e.g., a circling descent). For example, the flight management system may calculate a vertical descent time by dividing the vertical distance (i.e., difference in altitude) between the first location and the second location and a predetermined maximum comfortable rate of descent associated with the aircraft. The maximum comfortable rate of descent will vary depending on the type of aircraft. For example, larger aircraft have lower comfortable rates of descent while smaller aircraft have higher comfortable rates of descent. In this regard, the vertical descent time corresponds to the minimum amount of travel time needed for the aircraft to complete a comfortable descent. The flight management system may also calculate a horizontal travel time based on the horizontal distance between the first location and the second location and a speed metric associated with the aircraft (e.g., the effective groundspeed of the aircraft).

If the vertical descent time is greater than the horizontal travel time, then in order to reach the landing location on the ground, the aircraft must make a non-comfortable descent (e.g., exceed the comfortable rate of descent or require uncomfortable turns and/or banking). In this situation, the waypoint display process 300 may indicate the landing location which cannot be comfortably reached using a third visually distinguishable characteristic (e.g., in a third color). The third visually distinguishable characteristic is chosen to warn the user that the aircraft cannot comfortably reach the landing location even if there is sufficient fuel remaining. If the landing location can be comfortably reached, the waypoint display process 300 displays the image and/or graphical representation of the landing location on the display device in the second visually distinguishable characteristic (e.g., green), which indicates that the aircraft can reach the landing location (e.g., task 312). In an exemplary embodiment, the same visually distinguishable characteristic used to indicate insufficient fuel to reach a location is also used to indicate a landing location cannot be comfortably reached (e.g., task 310). For example, using the same color (e.g., amber or yellow) for landing locations which cannot be reached (e.g., because of insufficient fuel or uncomfortable descents) allows a user to more readily identify the optimum landing locations (e.g., the locations displayed in green). Additionally, there may be limited available colors as some colors for aircraft displays are reserved for the most safety-critical indications.

In accordance with one embodiment, the waypoint display process 300 may be repeated as desired. For example, the waypoint display process 300 may be utilized in flight planning or determining a flight plan. For example, referring again to FIG. 2, if the aircraft has sufficient fuel to reach the second location 208, the flight management system may be configured to incorporate the second location 208 into a particular flight plan. The user may then identify a third location (not illustrated) to travel to after traveling to the second location 208. The flight management system may determine the amount of fuel required for the aircraft to travel from the second location 208 to the third location (task 306). The flight management system may determine a fuel level associated with the second location 208 by subtracting the fuel required to reach the second location 208 from the fuel level associated with the first location (the initial aircraft location for this example). If the amount of fuel required to travel from the second location 208 to the third location is greater than the fuel level associated with the second location 208, the flight management system may display an image and/or graphical representation of the third location on the display device in the first color (e.g., amber) to indicate the aircraft does not have sufficient fuel to reach the third location (tasks 308, 310). Similarly, if the amount of fuel required to travel from the second location 208 to the third location is less than the fuel level associated with location 208, the flight management system may display an image and/or graphical representation of the third location on the display device in the second color (e.g., green) to indicate the aircraft does have sufficient fuel to reach the third location (tasks 308, 310, 312).

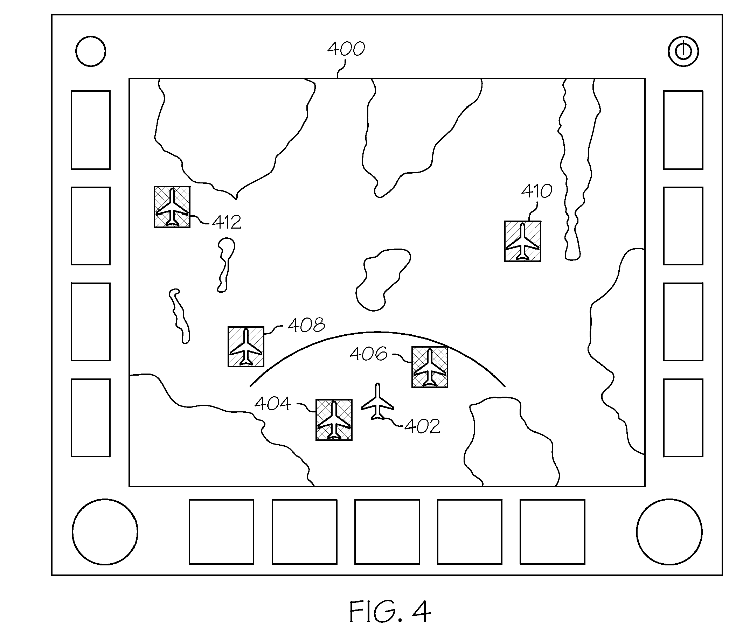

Referring now to FIG. 4, in accordance with one embodiment, the waypoint display process 300 may utilize the NRST function (or an equivalent thereof) to identify a plurality of possible destination locations (i.e., a plurality of second locations). For example, as shown in FIG. 4, a user may indicate a desired category of waypoint, such as airports, and the NRST function returns the nearest airports 404, 406, 408, 410, 412 based on the current location of the aircraft 402. Depending on the algorithm, the NRST function may return the nearest airports until reaching a certain number of results or a certain distance from the current location. Tasks 306, 308, 310 and 312 may repeat as desired to display all of the waypoints returned by the NRST function on the navigational map 400. For example, as shown in FIG. 4, airport 412, which has a calculated fuel requirement greater than the amount of fuel remaining onboard the aircraft, is indicated in the first color (e.g., amber) to warn the user that the aircraft does not have sufficient fuel to reach airport 412. Airports 404, 406, which are nearest the aircraft 402, have a horizontal travel time that is less than the minimum comfortable vertical descent time. Therefore, these airports 404, 406 are also indicated in the first color (e.g., amber) to warn the user that the aircraft cannot comfortably reach the airports 404, 406 even though there is sufficient fuel remaining. Airports 408, 410, which can be comfortably reached and have a calculated required amount of fuel less than the amount of fuel remaining onboard the aircraft, are indicated in the second color (e.g., green) to inform the user that the airports 408, 410 can be reached without any unusual maneuvering. In this manner, a user may utilize the flight management system to quickly and reliably locate one or more potential landing locations in case of an emergency.

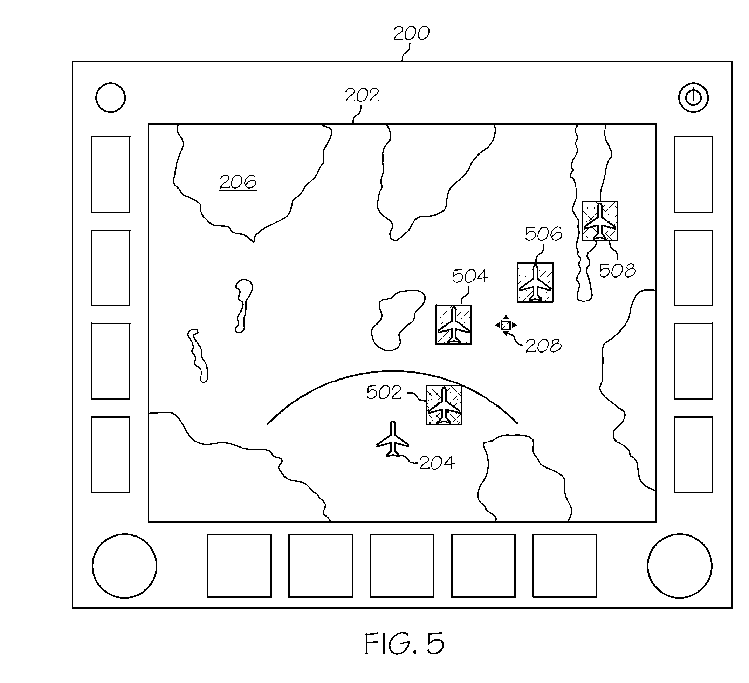

Referring now to FIG. 2 and FIG. 5, in another embodiment, the waypoint display process 300 may be adapted to utilize the NRST function (or other functionality) based on a previously identified location. For example, as shown in FIG. 5, the NRST function may be adapted or modified to determine the airports 502, 504, 506, 508 closest to the previously identified location 208. For example, a user may want to land the aircraft near the second location 208. Alternatively, user may prefer to land the aircraft in a particular direction relative to the current heading (to the right as shown in FIG. 5) because of environmental conditions (e.g., a storm to the left), damage to the aircraft, or some other reason. Tasks 306, 308, 310, and 312, may be repeated for each airport 502, 504, 506, 508 based on the current location of the aircraft 204. As shown, airport 508 has a calculated required fuel greater than the amount of fuel onboard the aircraft and, therefore, is rendered in the first color (e.g., amber) to warn the user that the aircraft does not have sufficient fuel to reach airport 508. Airport 502 has a horizontal travel time that is less than the minimum comfortable vertical descent time and, therefore, is rendered in the first color (e.g., amber) to warn the user that the aircraft cannot comfortably reach the landing location even though there is sufficient fuel. Airports 504, 506 can be comfortably reached and are within range of the aircraft, and, therefore, are rendered in the second color (e.g., green) to inform the user that the airports 504, 506 can be reached. In another embodiment, the waypoint display process 300 may be modified to determine whether the airports 502, 504, 506, 508 can be reached from location 208 (tasks 306, 308, 310, and 312).

To briefly summarize, the methods and systems described above allow a user, such as a pilot or crew member, to identify or select a destination location on a navigational map in the cockpit and quickly and reliably determine whether the aircraft can reach the identified location. In the case of emergency, the flight management system can be utilized to quickly determine the most viable landing locations based on the current location of the aircraft.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It being understood that various changes may be made in the function and arrangement of elements described in an exemplary embodiment without departing from the scope of the subject matter as set forth in the appended claims.

## Claims

1. A method for indicating on a display device (102) whether a vehicle (108) has sufficient fuel remaining to travel from a first location (204) to a second location (208), the method comprising:
determining a first amount of fuel required for the vehicle to travel from the first location (204) to the second location (208);
if the first amount of fuel required is greater than a threshold fuel value associated with the first location (204), displaying a graphical representation of the second location (208) on the display device (102, 200) using a first visually distinguishable characteristic; and
if the first amount of fuel required is less than the threshold fuel value, displaying the graphical representation of the second location (208) on the display device (102, 200) using a second visually distinguishable characteristic.

2. The method of claim 1, wherein determining the first amount of fuel comprises determining the first amount of fuel based on at least one parameter selected from the group consisting of: a distance between the first location (204) and the second location (208), a weight of the vehicle (108), a fuel flow rate associated with the vehicle (108), a speed metric associated with the vehicle (108), wind speed, wind direction, temperature, and pressure.

3. The method of claim 1, further comprising identifying the second location (208), wherein the first location is a current location (204) of the vehicle (108) and the threshold fuel value is a current amount of fuel onboard the vehicle (108).

4. The method of claim 3, wherein identifying the second location (208) comprises:
determining a nearest point of a plurality of points maintained in a database (112) based on the first location (204), wherein the database (112) maintains a respective location associated with each of the plurality of points; and
identifying the respective location associated with the nearest point as the second location (208).

5. The method of claim 1, the vehicle being an aircraft (108), wherein the method further comprises:
calculating a vertical descent time based on a vertical distance between the first location (402) and the second location (404) and a maximum descent rate associated with the aircraft (108, 402);
calculating a horizontal travel time based on a horizontal distance between the first location (402) and the second location (404) and a speed metric associated with the aircraft (108, 402); and
if the vertical descent time is greater than the horizontal travel time, displaying the graphical representation of the second location (404) on the display device (102, 400) using a third visually distinguishable characteristic.

6. The method of claim 5, further comprising identifying a landing location (404, 406, 408, 410, 412) for use as the second location, wherein the first location is a current location (204, 402) of the aircraft (108).

7. The method of claim 1, further comprising:
identifying a third location (502, 504, 506, 508);
determining a second amount of fuel required for the vehicle to travel from the second location (208) to the third location (502, 504, 506, 508);
if the second amount of fuel required is greater than a second fuel level associated with the second location (208), displaying a graphical representation of the third location (502, 504, 506, 508) on the display device (102, 200) using the first visually distinguishable characteristic; and
if the second amount of fuel required is less than the second fuel level, displaying the graphical representation of the third location (502, 504, 506, 508) on the display device (102, 200) using the second visually distinguishable characteristic.

8. The method of claim 7, the vehicle being an aircraft (108), wherein the method further comprises:
calculating a vertical descent time based on a vertical distance between the second location (208) and the third location (502, 504, 506, 508) and a maximum descent rate associated with the aircraft (108, 204);
calculating a horizontal travel time based on a horizontal distance between the second location (208) and the third location (502, 504, 506, 508) and a speed metric associated with the aircraft (108, 204); and
if the vertical descent time is greater than the horizontal travel time, displaying the graphical representation of the third location (502, 504, 506, 508) on the display device (102, 200) using a third visually distinguishable characteristic.

9. The method of claim 8, wherein identifying the third location (504) comprises:
determining a nearest landing location (504) of a plurality of landing locations (502, 504, 506, 508) maintained in a database (112) based on the second location (208), wherein the database (112) maintains a respective location associated with each of the plurality of landing locations (502, 504, 506, 508); and
identifying the respective location associated with the nearest landing location (504) as the third location.

10. A display system (100) for use in an aircraft (108), the display system (100) comprising:
a display device (102) associated with the aircraft (108), the display device (102) being adapted to display a graphical representation of a waypoint;
a navigation system (104) adapted to determine a current position (204) of the aircraft (108); and
a flight management system (106) coupled to the display device (102) and the navigation system (104), the flight management system (106) being configured to:
calculate a required amount of fuel to travel from the current position of the aircraft (204) to a location (208) associated with the waypoint;
render the graphical representation of the waypoint (208) on the display device (102, 200) using a first visually distinguishable characteristic if the required amount of fuel is greater than a current amount of fuel onboard the aircraft (108); and
render the graphical representation of the waypoint (208) on the display device (102, 200) using a second visually distinguishable characteristic if the required amount of fuel is less than the current amount of fuel onboard the aircraft (108).
